(19) Europäisches Patentamt

European Patent Office

Office européen des brevets

(11) **EP 2 862 662 B1**

(12) **EUROPEAN PATENT SPECIFICATION**

(45) Date of publication and mention
of the grant of the patent:
**20.09.2017 Bulletin 2017/38**

(51) Int Cl.:
*B23K 9/23* *(2006.01)*　　*B23K 9/16* *(2006.01)*
*B23K 9/173* *(2006.01)*　　*C22C 18/04* *(2006.01)*
*C22C 38/14* *(2006.01)*　　*C22C 38/00* *(2006.01)*
*C22C 38/12* *(2006.01)*　　*C22C 38/06* *(2006.01)*
*C22C 38/04* *(2006.01)*　　*C22C 38/02* *(2006.01)*
*B23K 35/38* *(2006.01)*　　*B23K 35/00* *(2006.01)*
*B32B 15/01* *(2006.01)*　　*C22C 18/00* *(2006.01)*

(21) Application number: **13803668.6**

(22) Date of filing: **22.05.2013**

(86) International application number:
**PCT/JP2013/064196**

(87) International publication number:
**WO 2013/187197 (19.12.2013 Gazette 2013/51)**

(54) **PROCESS FOR PRODUCING ARC-WELDED STRUCTURAL MEMBER**

VERFAHREN ZUR HERSTELLUNG LICHTBOGENGESCHWEISSTER BAUTEILE

PROCÉDÉ POUR PRODUIRE UN ÉLÉMENT STRUCTUREL SOUDÉ À L'ARC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.06.2012 JP 2012134657**

(43) Date of publication of application:
**22.04.2015 Bulletin 2015/17**

(73) Proprietor: **Nisshin Steel Co., Ltd.**
**Chiyoda-ku, Tokyo 100-8366 (JP)**

(72) Inventors:
• **HOSOMI, Kazuaki**
**Sakai-shi**
**Osaka 592-8332 (JP)**

• **NOBUTOKI, Tomokazu**
**Sakai-shi**
**Osaka 592-8332 (JP)**
• **ASADA, Hiroshi**
**Sakai-shi**
**Osaka 592-8332 (JP)**

(74) Representative: **Schmidbauer, Andreas Konrad**
**Wagner & Geyer Partnerschaft**
**Patent- und Rechtsanwälte**
**Gewürzmühlstrasse 5**
**80538 München (DE)**

(56) References cited:
**JP-A- 2001 096 368　　JP-A- 2004 090 017**
**JP-A- 2004 344 904　　JP-A- 2004 344 905**
**JP-A- 2005 000 986　　JP-A- 2009 012 027**
**JP-A- 2010 221 247　　JP-A- 2011 208 264**

**Description**

Technical Field

The present invention relates to a method for producing an arc-welded structural member excellent in liquid metal embrittlement cracking resistance that is constituted by a hot dip Zn-Al-Mg based alloy coated steel plate member as one or both members to be welded.

Background Art

A hot dip zinc type coated steel plate is being widely used in various fields including a construction member and an automobile body member due to the good corrosion resistance thereof. In the hot dip zinc type coated steel plate, a hot dip Zn-Al-Mg based alloy coated steel plate maintains the excellent corrosion resistance thereof for a prolonged period of time, and thus is in increasing demand as an alternate material for an ordinary hot dip galvanized steel plate.

As described in PTLs 1 and 2, the coated layer of the hot dip Zn-Al-Mg based alloy coated steel plate has a metal structure that contains a $Zn/Al/Zn_2Mg$ ternary eutectic system as a matrix having dispersed therein a primary A1 phase, or a primary Al phase and a Zn phase, and the corrosion resistance is enhanced with Al and Mg. Since a dense and stable corrosion product containing Mg is uniformly formed on the surface of the coated layer, the corrosion resistance of the coated layer is drastically enhanced as compared to an ordinary hot dip galvanized steel plate.

In the fabrication of a construction member, an automobile body member or the like with a hot dip Zn-Al-Mg based alloy coated steel plate, a gas-shielded arc-welding method is often employed. The hot dip Zn-Al-Mg based alloy coated steel plate has a problem that on arc-welding thereof, liquid metal embrittlement cracking is liable to occur as compared to a galvanized steel plate. It has been noted that the problem occurs due to the decrease of the liquidus temperature of the coated layer caused by Mg contained (PTLs 3 and 4).

On arc-welding a coated steel plate, the metal of the coated layer is melted on the surface of the base steel (steel plate to be coated) around the portion where the arc passes. The alloy of the coated layer of the hot dip Zn-Al-Mg based alloy coated steel plate has a liquidus temperature that is lower than the melting point of Zn (approximately 420°C) and maintains the molten state for a relatively long period of time. In an alloy of Zn-6% by mass Al-3% by mass Mg, for example, the solidification temperature is approximately 335°C. In the metal derived from the Zn-Al-Mg based alloy coated layer melted on the surface of the base steel, the Al concentration is decreased with the consumption of the Al component through the reaction in the initial stage with Fe present underneath to form an Fe-Al alloy layer, and the molten metal thus finally has a composition that is close to a Zn-Mg binary system, but the alloy of Zn-3% by mass Mg still has a solidification temperature of 360°C, which is lower than the melting point of Zn, 420°C. Accordingly, the Zn-Al-Mg based alloy coated steel plate has a prolonged period of time where the molten metal of the coated layer melted on arc-welding remains on the surface of the base steel while maintaining the liquid state, compared to the galvanized steel plate.

On exposing the surface of the base steel for a prolonged period of time, which is suffering a tensile stress on cooling immediately after arc-welding, to the molten coated metal, the molten metal penetrates into the crystalline grain boundaries of the base steel to become a factor causing liquid metal embrittlement cracking. The liquid metal embrittlement cracking thus occurring acts as a starting point of corrosion and thus deteriorates the corrosion resistance. The liquid metal embrittlement cracking may also cause problems including deterioration of the strength and the fatigue characteristics.

As a measure for suppressing the liquid metal embrittlement cracking of the hot dip Zn-A1-Mg based alloy coated steel plate on arc-welding, there has been a proposal that the coated layer is removed by grinding before arc-welding. PTL 4 discloses a method of providing liquid metal embrittlement cracking resistance by using, as a base steel for coating, a steel plate having ferrite crystalline grain boundaries having been strengthened by the addition of boron. PTL 5 discloses a method of suppressing liquid metal embrittlement cracking in such a manner that Zn, Al and Mg are oxidized on arc-welding by filling a flux containing $TiO_2$ and FeO in the sheath of the welding wire.

Attention is also drawn to JP 2001 096368 A which discloses an arc welding method for a high strength steel sheet comprising the usage of $CO_2$ gas or mixed gas of Ar and $CO_2$ as shielding gas, wherein MAG welding is proceeded at a constant electric current within a limited welding heat.

Further, JP 2011 208264 A discloses a vehicle chassis member excellent in corrosion resistance and a method of manufacturing the same by providing the vehicle chassis member with an arc welding joint of molten Zn-Al-Mg alloy-plated steel and with sheet members whose surface was plated before welding with a Zn-Al-Mg alloy layer. Additionally an Al-Mg alloy layer exists between the Zn-Al-Mg alloy layer and the steel substrate. Said layer has an average Al concentration of 0.2-22.0 mass%, an average Mg concentration of 1.0-10.0 mass%; and another Fe-Al alloy layer has an average Fe concentration of at most 70.0 mass%.

CITATION LIST

Patent Literatures

PTL 1: Japanese Patent No. 3,149,129
PTL 2: Japanese Patent No. 3,179,401
PTL 3: Japanese Patent No. 4,475,787
PTL 4: Japanese Patent No. 3,715,220
PTL 5: JP-A-2005-230912

Summary of Invention

Technical Problem

The method of removing the coated layer by grinding and the method of using the special welding wire involve much increase in cost. The method of using the boron-added steel as the base steel for coating narrows the degree of freedom in selection of the species of steel. Furthermore, even though these methods are employed, there are cases where the liquid metal embrittlement cracking is not sufficiently prevented depending on the shape of the member and the welding condition, and thus these methods may still not be a fundamental measure for preventing the liquid metal embrittlement cracking of an arc-welded structure of a Zn-Al-Mg based alloy coated steel plate.

In recent years, a high tensile strength steel plate having a tensile strength of 590 MPa or more is being used as a base steel for coating for reducing the weight of automobiles. A hot dip Zn-Al-Mg based alloy coated steel plate using the high tensile strength steel plate suffers an increased tensile stress in the heat affected zone and thus is liable to suffer liquid metal embrittlement cracking, which may restricts the shapes of members and the purposes to be applied.

In view of the circumstances, an object of the invention is to provide excellent liquid metal embrittlement cracking resistance to an arc-welded structural member using a Zn-Al-Mg based alloy coated steel plate member without restriction of the species of steel for the base steel for coating and without much increase in cost.

Solution to Problem

In accordance with the present invention, a method as set forth in claim 1 is provided. Further embodiments of the invention are inter alia disclosed in the dependent claims. According to the investigations made by the inventors, it has been confirmed that such a phenomenon occurs that the coated layer once disappears through evaporation in the vicinity of the weld bead on gas-shielded arc-welding, but after the arc passes, the metal of the coated layer that is in a molten state at the position somewhat apart from the bead immediately spreads by wetting to the portion where the coated layer has disappeared. It is considered that by preventing the spread by wetting until completion of the cooling while maintaining the state where the coated layer disappears through evaporation, the penetration of the coated layer component to the base steel in the vicinity of the weld bead may be avoided, and thus the liquid metal embrittlement cracking may be effectively prevented. As a result of the detailed investigations made by the inventors, it has been found that the spread by wetting in a Zn-Al-Mg based alloy coated steel plate member may be remarkably suppressed by decreasing the found that the spread by wetting in a Zn-Al-Mg based alloy coated steel plate member may be remarkably suppressed by decreasing the concentration of $CO_2$, which is generally mixed in the shielding gas in an amount of approximately 20% by volume. The allowable upper limit of the $CO_2$ concentration being 17 % by volume and may be controlled as a function of the welding heat input. It has been also found that the allowable range for the upper limit of the $CO_2$ concentration may be enhanced in the case where a Zn-Al-Mg based alloy coated steel plate member has a small thickness. The invention has been completed based on the knowledge.

The object may be achieved by a method for producing an arc-welded structural member containing a step of joining steel members by gas-shielded arc-welding to manufacture a welded structural member, at least one of the members to be joined being a hot dip Zn-Al-Mg based alloy coated steel plate member, and the shielding gas being a gas that is based on an Ar gas, a He gas or an Ar-He mixed gas and has a $CO_2$ concentration satisfying the following expression (2) in relation to a welding heat input Q (J/cm) shown by the following expression (1) :

$$Q = (I \times V) / v \qquad (1)$$

$$0 \leq C_{CO2} \leq 2900Q^{-0.68} \qquad (2)$$

wherein I represents a welding current (A), V represents an arc voltage (V), v represents a welding speed (cm/sec), and $C_{CO2}$ represents a $CO_2$ concentration in the shielding gas (% by volume).

The hot dip Zn-Al-Mg based alloy coated steel plate member referred herein is a member formed of a hot dip Zn-Al-Mg based alloy coated steel plate or a member obtained by forming the same as a raw material. The welding heat input Q may be, for example, in a range of from 2,000 to 12,000 J/cm.

As a comparative example, in the case where the hot dip Zn-Al-Mg based alloy coated steel plate member is formed of a base steel for coating having a thickness of 2.6 mm or less (for example, from 1.0 to 2.6 mm), the following expression (3) may be applied instead of the expression (2):

$$0 \leq C_{CO2} \leq 205Q^{-0.32} \qquad (3)$$

In the case where the thickness of the plate is small as in this case, the welding heat input Q may be preferably, for example, in a range of from 2,000 to 4,500 J/cm.

The hot dip Zn-Al-Mg based alloy coated steel plate preferably has, for example, a coated layer that contains: from 1.0 to 22.0% of Al; from 0.05 to 10.0% of Mg; from 0 to 0.10% of Ti; from 0 to 0.05% of B; from 0 to 2.0% of Si; from 0 to 2.5% of Fe; the balance of Zn; and unavoidable impurities, all in terms of % by mass. The coating weight thereof is preferably from 20 to 250 g/m$^2$ per one surface.

Advantageous Effects of Invention

According to the invention, excellent liquid metal embrittlement cracking resistance may be stably imparted to an arc-welded structure using a hot dip Zn-Al-Mg based alloy coated steel plate, which is inherently liable to suffer liquid metal embrittlement cracking, without any particular increase in cost. The allowable upper limit of the $CO_2$ concentration in the shielding gas is determined corresponding to the welding heat input, and thus the advantages of the use of $CO_2$ mixed therein (for example, inhibition of oxidation in a vicinity of a weld bead utilizing the reducing function of CO formed with arc) may be maximally used. There is no particular restriction in the species of steel of the base steel for coating, and thus there is no necessity of the use of a steel having a special element added for preventing molten metal brittle cracking. The excellent liquid metal embrittlement cracking resistance may be obtained even with a high tensile strength steel plate. Furthermore, there is a high degree of freedom in shape of members. Accordingly, the invention may contribute to the spread of an arc-welded Zn-Al-Mg based alloy coated steel plate structural member in wide varieties of fields including an arc-welded structural member for an automobile body using a high tensile strength steel plate which is expected to increase in demand.

Brief Description of Drawings

[Fig. 1] The figure is a schematic cross sectional view showing a torch and a base steel in gas-shielded welding.
[Fig. 2] The figure is a schematic cross sectional view showing a welded part of a lap joint.
[Fig. 3] The figure is a schematic cross sectional view showing a vicinity of a welded part of a hot dip Zn-Al-Mg based alloy coated steel plate in arc-welding, in which the welded part is at a high temperature immediately after an arc passes.
[Fig. 4] The figure is a schematic cross sectional view showing an ordinary hot dip Zn-Al-Mg based alloy coated steel plate arc-welded structural member, in which the welded part is cooled from the state shown in Fig. 3.
[Fig. 5] The figure is a schematic cross sectional view showing a hot dip Zn-Al-Mg based alloy coated steel plate arc-welded structural member according to the invention, in which the welded part is cooled from the state shown in Fig. 3.
[Fig. 6] The figure is a graph showing influence of a welding heat input and a $CO_2$ concentration in a shielding gas on a length of a portion of a Zn-Al-Mg based alloy coated steel plate arc-welded structural member where a coated layer is evaporated.
[Fig. 7] The figure is an illustration showing a welding experiment method for investigating liquid metal embrittlement cracking resistance.
[Fig. 8] The figure is a graph showing influence of a welding heat input and a $CO_2$ concentration in a shielding gas on a length of a portion of a Zn-Al-Mg based alloy coated steel plate arc-welded structural member where a coated layer is evaporated (with a small steel plate thickness).

Description of Embodiments

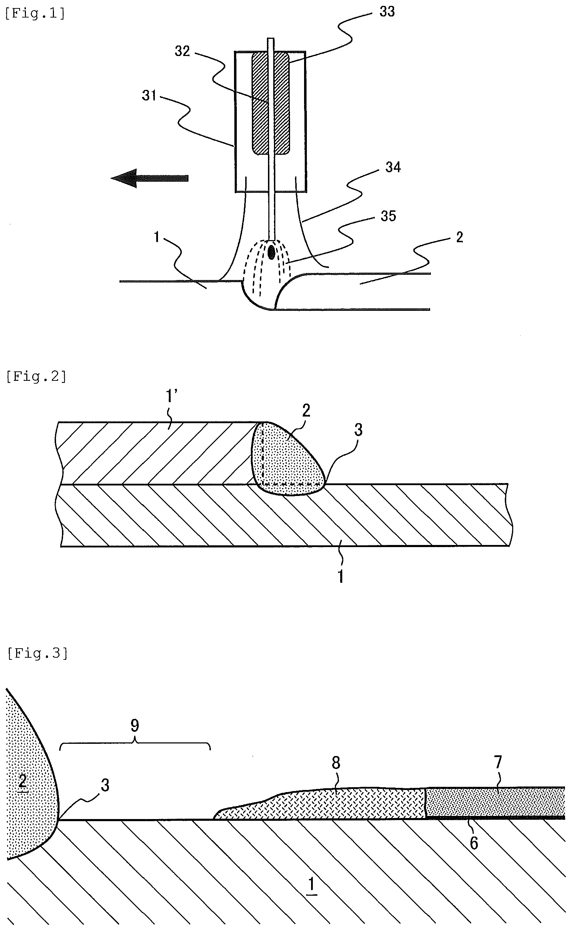

Fig. 1 is a schematic cross sectional view showing a torch and a base steel in gas-shielded welding. A welding torch 31 proceeds in the direction shown by the arrow while forming an arc 35 on a surface of a base steel 1. A shielding gas 34 is blown from a circumference of an electrode 33 and a welding wire 32, which are positioned at the center of the welding torch 31, and protects the arc 35 and the surface of the base steel 1 exposed to a high temperature from the air. A part of the base steel 1 that has been melted through heat input from the arc 35 is quickly solidified after the welding torch 31 passes to form a weld bead 2 formed of a weld metal. The shielding gas 34 is necessarily a nonoxidizing gas. In general, an Ar-$CO_2$ mixed gas containing an inert gas, such as Ar, having $CO_2$ added in an amount of approximately 20% by volume is employed. It is considered that $CO_2$ in the shielding gas 34 is partially dissociated to CO and $O_2$ with the arc 35 in a plasma state, and CO exhibits a reducing function, by which the weld bead and the vicinity thereof are prevented from being oxidized. Consequently, the reduction in corrosion resistance in the welded part may be prevented thereby.

Fig. 2 is a schematic cross sectional view showing a welded part of a lap joint, for example. This type of a welded joint by arc-welding is often used in a chassis of an automobile and the like. The base steel 1 and another base steel 1', which are steel plate members, are disposed and lapped on each other, and the base steel 1 and 1' are joined by forming the weld bead 2 on the surface of the base steel 1 and the end surface of the base steel 1'. The broken lines in the figure show the position of the surface of the base steel 1 and the position of the end surface of the base steel 1' before welding. The intersecting point of the surface of the base steel and the weld bead is referred to as a toe of weld. In the figure, the toe of weld of the base steel 1 is shown by the numeral 3.

Figs. 3 to 5 are enlarged schematic cross sectional views showing the structure of the portion corresponding to the vicinity of the toe of weld 3 shown in Fig. 2.

Fig. 3 is a schematic cross sectional view showing a vicinity of a welded part of a Zn-Al-Mg based alloy coated steel plate in gas-shielded arc-welding, in which the welded part is at a high temperature immediately after an arc passes. The surface of the base steel 1 has been covered with a uniform coated layer 7 through an Fe-Al based alloy layer 6 before welding, but the metal of the coated layer disappears through evaporation in a region near the toe of weld 3 (i.e., a coated layer evaporated region 9) after the arc passes. In a region with a larger distance from the toe of weld 3 than the coated layer evaporated region 9, the original coated layer 7 is melted to form a Zn-Al-Mg molten metal 8 but does not reach the disappearance through evaporation. In a region with a further larger distance from the toe of weld 3, the original coated layer 7 remains without melting. In Fig. 3, the thicknesses of the Zn-Al-Mg molten metal 8 and the coated layer 7 are shown with exaggeration.

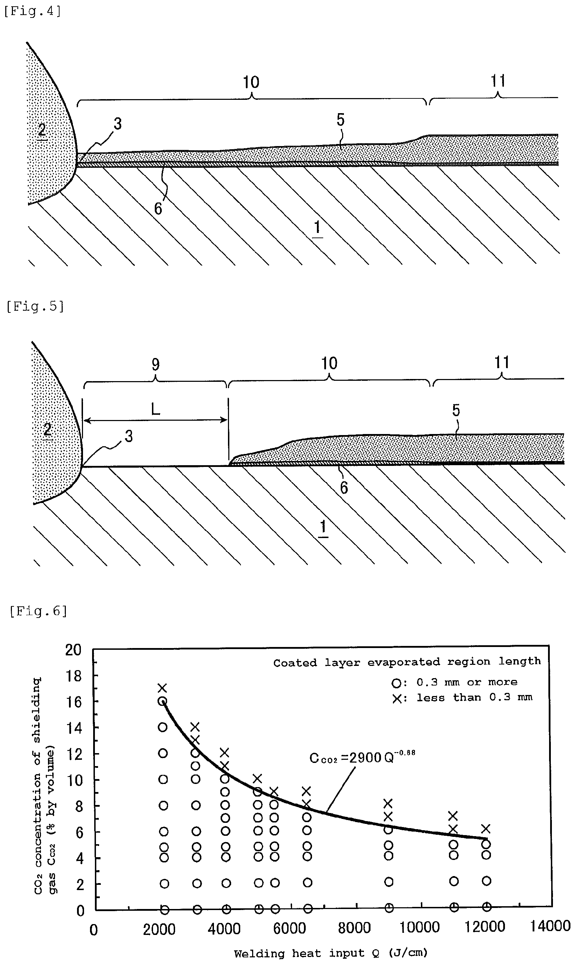

Fig. 4 is a schematic cross sectional view showing an ordinary Zn-Al-Mg based alloy coated steel plate arc-welded structural member, in which the welded part is cooled from the state shown in Fig. 3. In this case, the Zn-Al-Mg molten metal (denoted by the numeral 8 in Fig. 3) spreads by wetting over the coated layer evaporated region (denoted by the numeral 9 in Fig. 3) formed by disappearance of the coated layer in welding, and the entire surface of the base steel 1 is covered up to the toe of weld 3 with a Zn-Al-Mg alloy layer 5. The portion of the Zn-Al-Mg alloy layer 5 that is formed through solidification of the Zn-Al-Mg molten metal (denoted by the numeral 8 in Fig. 3) is referred to as a molten metal solidified region 10, and the portion of the Zn-Al-Mg based alloy layer 5 that is formed with the original coated layer 7 remaining is referred to as a non-melted coated layer region 11. In the ordinary Zn-Al-Mg based alloy coated steel plate arc-welded structural member, the portion just next to the toe of weld 3 is generally the molten metal solidified region 10 as shown in the figure. In this case, the Zn-Al-Mg molten metal 8 has a low liquidus temperature as described above, and thus the portion of the surface of the base steel 1 to be the molten metal solidified region 10 after cooling is in contact with the Zn-Al-Mg based alloy molten metal for a relatively long period of time in the cooling process after welding. The portion of the base steel 1 that is close to the toe of weld suffers a tensile stress on cooling after welding, and thus the component of the Zn-Al-Mg molten metal is liable to penetrate the crystalline grain boundaries thereof. The component thus penetrating the grain boundaries may be a factor causing liquid metal embrittlement cracking.

Fig. 5 is a schematic cross sectional view showing a Zn-Al-Mg based alloy coated steel plate arc-welded structural member according to the invention, in which the welded part is cooled from the state shown in Fig. 3. In the invention, the shielding gas used is a gas having a decreased $CO_2$ concentration or a gas having no $CO_2$ added. Accordingly, it is considered that the surface of the base steel 1 in the coated layer evaporated region (denoted by the numeral 9 in Fig. 3) where the coated layer have disappeared on welding is oxidized due to the weak reducing function of the shielding gas, and thus quickly covered with a thin oxide film. It is thus expected that the oxide film prevents wetting of the Zn-Al-Mg based alloy molten metal (denoted by the numeral 8 in Fig. 3), and thus the Zn-Al-Mg based alloy molten metal is prevented from spreading by wetting. As a result, the coated layer evaporated region 9 remains after cooling. Thus, the cooling process is completed without contact between the surface of the base steel 1 in the vicinity of the toe of weld 3 and the Zn-Al-Mg based alloy molten metal, and thereby the molten metal component is prevented from penetrating the base steel 1 in the region. Consequently, excellent liquid metal embrittlement cracking resistance may be provided irrespective of the species of steel of the base steel 1. Even in such a welding position that the height of the Zn-Al-Mg molten metal (denoted by the numeral 8 in Fig. 3) is above the toe of weld 3, the Zn-Al-Mg based alloy molten metal is effectively prevented from spreading by wetting, due to the aforementioned wetting preventing effect.

In the invention, a gas having a decreased $CO_2$ concentration or a gas having no $CO_2$ added is used as a shielding gas, and thus the weld bead and the vicinity thereof are in an atmosphere that is more oxidative than an ordinary shielding gas. However, by using a hot dip Zn-Al-Mg based alloy coated steel plate as a member to be joined, the corrosion resistance is improved not only on the surface of the coated layer but also in the vicinity of the welded part where the steel as the base is exposed. Accordingly, the corrosion resistance for a prolonged period of time is improved by the excellent corrosion protecting function exhibited by the corrosion product derived from the Zn-Al-Mg based alloy coating metal, in addition to the corrosion protecting function of Zn, and thus the deterioration of the corrosion resistance due to the use of a gas having a decreased $CO_2$ concentration or a gas having no $CO_2$ added may not be elicited in normal use.

The distance between the coated layer evaporated region 9 remaining after cooling and the toe of weld 3 is referred to as a coated layer evaporated region length in the present description, which is denoted by the symbol L in Fig. 5. It has been confirmed that the liquid metal embrittlement cracking, which is a problem occurring in a Zn-Al-Mg based alloy coated steel plate arc-welded structural member, almost occurs in the close vicinity of the toe of weld 3, specifically the region of less than 0.3 mm from the toe of weld. As a result of the various investigations, the liquid metal embrittlement cracking resistance may be largely enhanced when the coated layer evaporated region length is 0.3 mm or more, and more preferably 0.4 mm or more. In the case where the coated layer evaporated region length is too large, there may be a problem of deterioration of the corrosion resistance due to the absence of the coated layer, and according to the investigations by the inventors, it has been found that when the coated layer evaporated region length is 2.0 mm or less, a sufficient sacrificial corrosion protection may be obtained by the surrounding Zn-Al-Mg based alloy coated layer, and thus there may be no problem in deterioration of the corrosion resistance in the region. The coated layer evaporated region length may be controlled to the range of from 0.3 to 2.0 mm by controlling the composition of the shielding gas as described later.

Gas-shielded Arc-Welding Condition

In arc-welding according to the invention, it is important to restrict the $CO_2$ concentration in the shielding gas corresponding to the welding heat input. $CO_2$ contained in the shielding gas is partially dissociated to CO and $O_2$ on contacting with a plasma arc as described above, and the surface of the base steel in the vicinity of the weld bead is activated by the reducing function of CO. In ordinary gas-shielded arc-welding, a shielding gas containing approximately 20% by volume of $CO_2$ is generally used for such purposes as oxidation prevention of the weld bead and the vicinity thereof. In the invention, however, the reducing function is suppressed or is completely not utilized, thereby preventing the surface of the base steel in the vicinity of the welded part, from which the coated layer has disappeared through evaporation, from being activated excessively, and thus the Zn-Al-Mg based alloy molten metal present on the surrounding surface of the base steel is prevented from spreading by wetting to the toe of weld. As a result of the detailed investigations, in the case where the $CO_2$ concentration in the shielding gas is restricted to satisfy the expression (2), the wet spreading preventing effect may be exhibited, and the coated layer evaporated region length may be controlled to the range of from 0.3 to 2.0 mm.

In the present description, there is disclosed a $CO_2$ concentration controlling method in a shielding gas, in which on producing a welded structural member by joining steel members by gas-shielded arc-welding with a shielding gas being based on an Ar gas, a He gas or an Ar-He mixed gas, at least one of the members to be joined is a hot dip Zn-Al-Mg based alloy coated steel plate member, and the $CO_2$ concentration of the shielding gas is controlled to satisfy the following expression (2) in relation to a welding heat input Q (J/cm) shown by the following expression (1):

$$Q = (I \times V) / v \qquad (1)$$

$$0 \leq C_{CO2} \leq 2900Q^{-0.68} \qquad (2)$$

wherein I represents a welding current (A), V represents an arc voltage (V), v represents a welding speed (cm/sec), and $C_{CO2}$ represents a $CO_2$ concentration in the shielding gas (% by volume).

As a comparative example in the case where a hot dip Zn-Al-Mg based alloy coated steel plate member using a base steel for coating having a thickness of 2.6 mm or less is applied to at least one of the members to be joined, the coated layer evaporated region length may be controlled to the range of from 0.3 to 2.0 mm even by applying the following expression (3) with a broader allowable upper limit instead of the expression (2).

In this case, there is disclosed a $CO_2$ concentration controlling method in a shielding gas, in which on producing a welded structural member by joining steel members by gas-shielded arc-welding with a shielding gas being based on an Ar gas, a He gas or an Ar-He mixed gas, at least one of the members to be joined is a hot dip Zn-Al-Mg based alloy coated steel plate member using a base steel for coating having a thickness of 2.6 mm or less, and the $CO_2$ concentration of the shielding gas is controlled to satisfy the following expression (3) in relation to the welding heat input Q (J/cm) shown by the expression (1):

$$0 \leq C_{CO2} \leq 205Q^{-0.32} \qquad (3)$$

wherein $C_{CO2}$ represents a $CO_2$ concentration in the shielding gas (% by volume).

The $CO_2$ concentration in the shielding gas may be controlled to a range that satisfies the expression (2) or, depending on the thickness condition, the expression (3), and it is more effective to ensure a $CO_2$ concentration of 5% by volume or more from the standpoint of stabilizing the arc. The stabilization of the arc is advantageous in increase of the melt depth. Specifically, the following expression (2)' may be applied instead of the expression (2), and the following expression (3)' may be applied instead of the expression (3):

$$5.0 \leq C_{CO2} \leq 2900Q^{-0.68} \qquad (2)'$$

$$5.0 \leq C_{CO2} \leq 205Q^{-0.32} \qquad (3)'$$

In the case where a hot dip Zn-Al-Mg based alloy coated steel plate member using a base steel for coating having a thickness of 2.6 mm or less is applied to at least one of the members to be joined, in particular, a $CO_2$ concentration controlling method in a shielding gas, in which the $CO_2$ concentration of the shielding gas is controlled to satisfy the following expression (4) in relation to the welding heat input Q (J/cm) shown by the expression (1), may be applied, and thereby the Zn-Al-Mg molten metal may be prevented from spreading by wetting to the toe of weld while exhibiting maximally the arc stabilization function of $CO_2$.

$$2900Q^{-0.68} \leq C_{CO2} \leq 205Q^{-0.32} \qquad (4)$$

The base gas of the shielding gas may be an Ar gas as in an ordinary shielding gas. A He gas or an Ar-He mixed gas may also be used. The purity of the base gas may be equivalent to an ordinary shielding gas.

The welding heat input may be determined to a suitable value depending on the thickness and the like. When the welding heat input is too small, there may be cases where the weld bead becomes discontinuous due to insufficient melting. When the welding heat input is too large, on the other hand, sputtering is liable to occur. The suitable value of the welding heat input may be generally found within a range of from 2,000 to 12,000 J/cm. However, in the case where a hot dip Zn-Al-Mg based alloy coated steel plate member using a base steel for coating having a thickness of 2.6 mm or less as at least one of the members to be joined is applied, the welding heat input is preferably in a range of from 2,000 to 4,500 J/cm. As for the other welding conditions, for example, the shielding gas flow rate may be controlled to a range of from 10 to 30 L/min. An ordinary welding equipment may be used.

An example of an experiment for investigating the relationship between the welding heat input and the $CO_2$ concentration in the shielding gas and the coated layer evaporated region length will be shown below.

Experimental Example 1

A hot dip n Zn-Al-Mg based alloy coated steel plate shown in Table 1 was placed horizontally, and a weld bead was formed on the surface of the steel plate (bead-on-plate) with an arc generated from a welding torch moving horizontally. The welding conditions are shown in Table 1. The vertical cross section of the base steel including the weld bead and the vicinity thereof perpendicular to the direction of the bead was subjected to mirror polishing and etching with a Nital solution having a nitric acid concentration of 0.2% by volume, and then observed with a scanning electron microscope. The vicinity of the toe of weld was observed, and thereby the coated layer evaporated region length denoted by the symbol L in Fig. 5 was measured.
[Table 1]

Table 1

| Hot dip Zn-Al-Mg based alloy coated steel plate | Composition of coated layer | Al: 6.1% by mass; Mg: 3.1% by mass; Zn: balance |
| --- | --- | --- |
| | Species of base steel for coating | low carbon Al killed steel |
| | Size | thickness: 3.2, width: 100, length: 150 (mm) |
| | Coating weight | 90 $g/m^2$ per one surface |
| Welding wire | | YGW12, diameter: 1.2 mm |
| Composition of shielding gas | | Ar, $CO_2$, Ar-$CO_2$ 2-17% by volume |
| Flow rate of shielding gas | | 20 L/min |
| Welding current | | 75 to 300 A |
| Arc voltage | | 12 to 30 V |
| Welding speed | | 0.4 m/min |
| Bead length | | 100 mm |

The results are shown in Fig. 6. In Fig. 6, the case where the coated layer evaporated region length is 0.3 mm or more is plotted as "O", and the case where it is less than 0.3 mm is plotted as "X". The curve where the welding heat input Q (J/cm) and the $CO_2$ concentration in the shielding gas $C_{CO2}$ (% by volume) have the relationship $C_{CO2} = 2900Q^{-0.68}$ clearly determines whether or not the coated layer evaporated region length is 0.3 mm or more. The liquid metal embrittlement cracking, which is a problem occurring in an arc-welded structural member using a Zn-Al-Mg based alloy coated steel plate, almost occurs in the region of less than 0.3 mm from the toe of weld as described above, and thus the liquid metal embrittlement cracking resistance may be largely enhanced by controlling the $CO_2$ concentration in the shielding gas not to exceed the curve in relation to the welding heat input. The $CO_2$ concentration in the shielding gas is more preferably 5.0% by volume or more from the standpoint of stabilizing the arc as described above, and even in this case, the welding heat input Q may be determined within a wide range, for example, of from 2,000 to 11, 500 J/cm, which may be applied to a wide range of thickness.

Experimental Example 2

A hot dip Zn-Al-Mg based alloy coated steel plate (thickness of base steel for coating: 2.6 mm) shown in Table 1-2 was placed horizontally, and a weld bead was formed on the surface of the steel plate (bead-on-plate) with an arc generated from a welding torch moving horizontally. The welding conditions are shown in Table 1-2. In the same manner as in Experimental Example 1, the vicinity of the toe of weld as observed, and thereby the coated layer evaporated region length denoted by the symbol L in Fig. 5 was measured.
[Table 1-2]

Table 1-2

| Hot dip Zn-Al-Mg based alloy coated steel plate | Composition of coated layer | Al: 6.1% by mass; Mg: 3.1% by mass; Zn: balance |
| --- | --- | --- |
| | Species of base steel for coating | low carbon Al killed steel |
| | Size | thickness: 2.6, width: 100, length: 150 (mm) |
| | Coating weight | 90 $g/m^2$ per one surface |
| Welding wire | | YGW12, diameter: 1.2mm |
| Composition of shielding gas | | Ar, $CO_2$, Ar-$CO_2$ 2-17% by volume |
| Flow rate of shielding gas | | 20 L/min |

(continued)

| Welding current | 75 to 300 A |
| Arc voltage | 12 to 30 V |
| Welding speed | 0.4 m/min |
| Bead length | 100 mm |

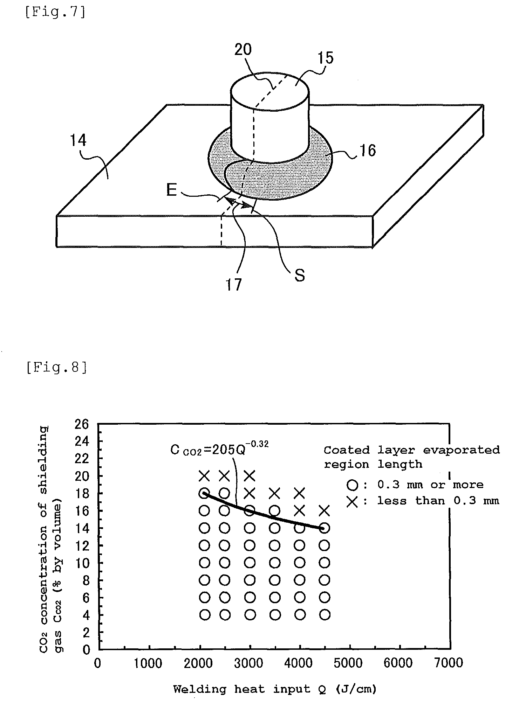

The results are shown in Fig. 8. In Fig. 8, the case where the coated layer evaporated region length is 0.3 mm or more is plotted as "O", and the case where it is less than 0.3 mm is plotted as "X". The curve where the welding heat input Q (J/cm) and the $CO_2$ concentration in the shielding gas $C_{CO2}$ (% by volume) have the relationship $C_{CO2} = 205Q^{-0.32}$ clearly determines whether or not the coated layer evaporated region length is 0.3 mm or more. Thus, in the case where a Zn-Al-Mg based alloy coated steel plate using a base steel for coating having a thickness of 2. 6 mm or less is applied, the allowable upper limit of the $CO_2$ concentration in the shielding gas is largely broadened as compared to the case in Fig. 6, which is an example where the thickness is 3.2 mm. It is considered that with a smaller thickness, the cooling speed after welding is increased to facilitate solidification of the metal of the coated layer, which has been in a molten state after an arc passes, before spreading by wetting to the coated layer evaporated region, and the allowable upper limit of the $CO_2$ concentration based on a coated layer evaporated region length of 0. 3 mm may change largely at the point where the thickness of the base steel for coating (corresponding to the base steel 1 in Fig. 5) is around 3 mm.

Hot dip Zn-Al-Mg Based Alloy Coated Steel Plate Member

In the invention, at least one of the members to be joined by arc-welding is a hot dip Zn-Al-Mg based alloy coated steel plate member.

The base steel for coating of the hot dip Zn-Al-Mg based alloy coated steel plate member may be various species of steel depending on purposes. A high tensile strength steel plate may be used therefor. In the case where the expression (2) is applied, the thickness of the base steel for coating may be from 1.0 to 6.0 mm, and may be controlled within a range of from 2.0 to 5.0 mm. As a comparative example, when the thickness of the base steel for coating is 2.6 mm or less (for example, from 1.0 to 2.6 mm), the expression (3) may be applied instead of the expression (2).

Specific examples of the composition of the coated layer of the hot dip Zn-Al-Mg based alloy coated steel plate include from 1.0 to 22.0% by mass of Al; from 0.05 to 10.0% by mass of Mg; from 0 to 0.10% by mass of Ti; from 0 to 0.05% by mass of B; from 0 to 2.0% by mass of Si; from 0 to 2.5% by mass of Fe; the balance of Zn; and unavoidable impurities. The composition of the coated layer substantially reflects the composition of the hot dip coating bath. The method for hot dip coating is not particularly limited, and in general, the use of an in-line annealing hot dip coating equipment is advantageous in cost. The component elements of the coated layer will be described below. The percentage for the component element of the coated layer means the percentage by mass unless otherwise indicated.

Al is effective for enhancing the corrosion resistance of the coated steel plate, and suppresses the formation of a Mg based oxide dross in the hot dip coating bath. For exhibiting the functions sufficiently, an Al content of 1.0% or more is preferably ensured, and an Al content of 4.0% or more is more preferably ensured. When the Al content is too large, on the other hand, a brittle Fe-Al alloy layer is liable to grow as an underlayer of the coated layer, and the excessive growth of the Fe-Al alloy layer may be a factor causing deterioration of the coating adhesion. As a result of the various investigations, the Al content is preferably 22.0% or less, and may be more preferably controlled to 15.0% or less, and further preferably 10.0% or less.

Mg forms a uniform corrosion product on the surface of the coated layer and largely enhances the corrosion resistance of the coated steel plate. The Mg content is preferably 0.05% or more, and more preferably 1.0% or more. When the Mg content in the coating bath is too large, on the other hand, a Mg based oxide dross is liable to be formed, which may be a factor causing deterioration of the quality of the coated layer. The Mg content is preferably in a range of 10.0% or less.

When the hot dip coating bath contains Ti and B, such an advantage is obtained that the degree of freedom in production conditions on hot dip coating. Accordingly, one or both of Ti and B may be added depending on necessity. The addition amounts thereof may be effectively 0.0005% or more for Ti and 0.0001% or more for B. When the contents of Ti and B in the coated layer are too large, they may be a factor of causing appearance failure of the surface of the coated layer due to deposited products formed thereby. In the case where these elements are added, the contents thereof are preferably 0.10% or less for Ti and 0.05% or less for B.

When the hot dip coating bath contains Si, such an advantage is obtained that the excessive growth of the Fe-Al alloy layer formed at the interface between the surface of the base steel for coating and the coated layer may be suppressed, which is thus advantageous for improvement of the processability of the hot dip Zn-Al-Mg based alloy coated steel plate. Accordingly, Si may be added depending on necessity. In this case, the Si content is preferably 0.005% or more. Too large Si content may be a factor increasing the dross amount in the hot dip coating bath, and therefore the Si content is preferably 2.0% or less.

The hot dip coating bath is liable to contain Fe since steel plates are dipped and passed therein repeatedly. The Fe content in the Zn-Al-Mg based alloy coating layer is preferably 2.5% or less.

When the coating weight of the hot dip Zn-Al-Mg based alloy coated steel plate member is too small, it is disadvantageous for maintaining the corrosion resistance and the sacrificial corrosion protection of the coated surface for a prolonged period of time. As a result of the various investigations, in the case where the coated layer evaporated region formed in the vicinity of the toe of weld is left according to the invention, it is effective that the coating weight of Zn-Al-Mg is from 20 g/m$^2$ or more per one surface. When the coating weight is too large, on the other hand, blow holes are liable to occur on welding. The formation of blow holes deteriorates the weld strength. Accordingly, the coating weight is preferably 250 g/m$^2$ or less per one surface.

Opposite Member for Welding

The opposite member to be joined to the hot dip Zn-Al-Mg based alloy coated steel plate member by arc-welding may be a hot dip Zn-Al-Mg based alloy coated steel plate member similar to the above and may be other kinds of steel. Example

Example 1

A cold-rolled steel strip having the composition shown in Table 2 below and having a thickness of 3.2 mm and a width of 1,000 mm was used as a base steel for coating and subjected to a hot dip coating line to produce hot dip Zn-Al-Mg based alloy coated steel plates having various coated layer compositions. The hot dip Zn-Al-Mg based alloy coated steel plates were subjected to gas-shielded arc-welding according to the test method shown later, and the influence of the composition of the shielding gas on the liquid metal embrittlement cracking property was investigated. The composition of the coating layer, the coating weight and the composition of the shielding gas are shown in Table 4. The shielding gases applied to examples of the invention had a composition containing from 0 to 16% by volume of CO$_2$ and the balance of at least one of Ar and He (which were the same as in Examples 2 and 3).

[Table 2]

Table 2

| Steel | Chemical composition (% by mass) | | | | | | Note |
|---|---|---|---|---|---|---|---|
| | C | Si | Mn | Al | Ti | Nb | |
| A | 0.22 | 0.006 | 0.8 | 0.04 | - | - | 490 MPa class high tensile strength steel |
| B | 0.11 | 0.10 | 1.8 | 0.04 | - | - | 590 MPa class high tensile strength steel |
| C | 0.11 | 0.4 | 2.0 | 0.4 | 0.04 | 0.02 | 980 MPa class high tensile strength steel |

Test Method for Liquid Metal Embrittlement Cracking Property

As shown in Fig. 7, a steel rod as a boss (protrusion) 15 having a diameter of 20 mm and a length of 25 mm was set up vertically on the center of a test specimen 14 (hot dip Zn-Al-Mg based alloy coated steel plate member) having a dimension of 100 mm × 75 mm, and the test specimen 14 and the boss 15 were joined by gas-shielded arc-welding under the welding conditions shown in Table 3. Specifically, the welding was performed from a welding starting point S in the clockwise direction, and after going round the boss 15, the welding was further performed through the welding starting point S with the weld beads overlapping, up to a welding end point E to form an overlapping portion 17 of a weld bead 16. The test specimen 14 was bound to a flat plate on welding. The test experimentally replicates a situation where weld cracking is liable to occur.

[Table 3]

Table 3

| Welding wire | YGW12, diameter: 1.2 mm |
|---|---|
| Composition of shielding gas | Invention;base gas:    Ar, He, Ar-He mixed gas, CO$_2$: 0-16% by volume |

(continued)

| | Comparison: | Ar-CO$_2$ 5.5 to 20.0% by volume |
|---|---|---|
| Flow rate of shielding gas | 20 L/min | |
| Welding current | 100 to 250 A | |
| Arc voltage | 14 to 32 V | |
| Welding speed | 0.4 m/min | |
| Welding heat input | 2,100 to 12,000 J/cm | |

After welding, a cross sectional surface 20 passing through the center axis of the boss 15 and the overlapping portion 17 of the weld bead was observed with a scanning electron microscope for the portion of the test specimen 14 in the vicinity of the overlapping portion 17 of the weld bead, thereby measuring the depth of the deepest crack (i.e., the maximum crack depth) observed in the test specimen 14. The crack was determined as liquid metal embrittlement cracking. The results are shown in Table 4.
[Table 4]

Table 4 (Plate Thickness: 3.2 mm)

| No. | Steel | Composition of Zn-Al-Mg based alloy coated layer (balance: Zn) (% by mass) | | | | | | coating weight (g/m²) | Composition of shielding gas (% by volume) | | | Welding heat input Q (J/cm) | $2900 \times Q^{-0.68}$ | Maximum crack depth (mm) | Note |
|---|---|---|---|---|---|---|---|---|---|---|---|---|---|---|---|
| | | Al | Mg | Si | Ti | B | Fe | | Ar | He | $CO_2$ | | | | |
| 1 | A | 4.1 | 0.05 | - | - | - | - | 44 | 100.0 | 0.0 | 0.0 | 2100 | 15.97 | 0 | Invention |
| 2 | B | 6.2 | 2.9 | 0.5 | 0.05 | 0.02 | - | 92 | 42.0 | 50.0 | 8.0 | 2100 | 15.97 | 0 | |
| 3 | C | 21.2 | 9.6 | 0.5 | 0.03 | 0.01 | 0.7 | 195 | 0.0 | 84.0 | 16.0 | 2100 | 15.97 | 0 | |
| 4 | A | 4.1 | 0.05 | 0.3 | - | - | 0.5 | 44 | 0.0 | 100.0 | 0.0 | 3100 | 12.25 | 0 | |
| 5 | B | 6.2 | 2.9 | 1.5 | - | - | 0.4 | 92 | 47.0 | 47.0 | 6.0 | 3100 | 12.25 | 0 | |
| 6 | C | 21.2 | 9.6 | - | - | - | 0.5 | 195 | 0.0 | 88.5 | 11.5 | 3100 | 12.25 | 0 | |
| 7 | A | 4.5 | 1.1 | 0.5 | - | - | - | 35 | 100.0 | 0.0 | 0.0 | 6000 | 7.82 | 0 | |
| 8 | A | 6.1 | 3.1 | - | - | - | - | 88 | 76.5 | 20.0 | 3.5 | 6000 | 7.82 | 0 | |
| 9 | B | 14.5 | 7.7 | - | - | - | 1.2 | 129 | 49.6 | 45.2 | 5.2 | 6000 | 7.82 | 0 | |
| 10 | C | 17.8 | 8.1 | 0.3 | - | - | 1.6 | 165 | 0.0 | 93.0 | 7.0 | 6000 | 7.82 | 0 | |
| 11 | C | 21.6 | 9.2 | 0.5 | - | - | - | 240 | 94.5 | 0.0 | 5.5 | 6000 | 7.82 | 0 | |
| 12 | A | 4.5 | 1.1 | 0.5 | - | 0.04 | 0.6 | 35 | 75.0 | 25.0 | 0.0 | 8000 | 6.43 | 0 | |
| 13 | A | 6.1 | 3.1 | 0.5 | 0.04 | 0.01 | - | 88 | 44.5 | 50.0 | 5.5 | 8000 | 6.43 | 0 | |
| 14 | B | 10.9 | 2.9 | 0.2 | - | - | - | 91 | 94.0 | 0.0 | 6.0 | 8000 | 6.43 | 0 | |
| 15 | B | 14.5 | 7.7 | 1.3 | - | - | 2.0 | 129 | 19.8 | 75.2 | 5.0 | 9000 | 5.94 | 0 | |
| 16 | C | 17.8 | 8.1 | 1.9 | - | - | 2.3 | 165 | 0.0 | 94.5 | 5.5 | 9000 | 5.94 | 0 | |
| 17 | C | 21.6 | 9.2 | 0.5 | - | - | 0.3 | 240 | 74.0 | 26.0 | 0.0 | 10000 | 5.53 | 0 | |
| 18 | A | 4.4 | 0.07 | 0.7 | - | - | 0.5 | 41 | 94.8 | 0.0 | 5.2 | 10000 | 5.53 | 0 | |
| 19 | B | 6.0 | 3.1 | 0.7 | 0.09 | 0.02 | - | 62 | 67.0 | 33.0 | 0.0 | 12000 | 4.88 | 0 | |
| 20 | C | 15.5 | 5.0 | - | 0.05 | - | - | 115 | 20.0 | 78.0 | 2.0 | 12000 | 4.88 | 0 | |
| 21 | C | 21.3 | 9.1 | - | - | - | - | 189 | 0.0 | 95.4 | 4.6 | 12000 | 4.88 | 0 | |

(continued)

| No. | Steel | Composition of Zn-Al-Mg based alloy coated layer (balance: Zn) (% by mass) | | | | | | coating weight (g/m²) | Composition of shielding gas (% by volume) | | | Welding heat input Q (J/cm) | $2900 \times Q^{-0.68}$ | Maximum crack depth (mm) | Note |
|---|---|---|---|---|---|---|---|---|---|---|---|---|---|---|---|
| | | Al | Mg | Si | Ti | B | Fe | | Ar | He | $CO_2$ | | | | |
| 22 | A | 4.2 | 1.6 | - | - | - | - | 34 | 80.0 | 0.0 | 20.0 | 2100 | 15.97 | 0.5 | Comparison |
| 23 | B | 6.2 | 2.9 | - | - | - | 0.5 | 92 | 0.0 | 86.0 | 14.0 | 3100 | 12.25 | 2.0 | |
| 24 | C | 20.5 | 9.5 | - | - | - | 0.4 | 180 | 44.0 | 44.0 | 12.0 | 4000 | 10.30 | 3.2 | |
| 25 | A | 4.5 | 1.1 | - | - | - | 0.5 | 45 | 87.0 | 0.0 | 13.0 | 4000 | 10.30 | 0.9 | |
| 26 | B | 11.2 | 2.9 | 1.3 | - | - | - | 62 | 45.0 | 46.0 | 9.0 | 6000 | 7.82 | 1.5 | |
| 27 | C | 21.0 | 9.9 | - | 0.05 | 0.01 | 0.5 | 240 | 0.0 | 80.0 | 20.0 | 6000 | 7.82 | 3.2 | |
| 28 | A | 4.4 | 1.2 | 0.5 | - | - | - | 60 | 82.0 | 10.0 | 8.0 | 8000 | 6.43 | 0.7 | |
| 29 | A | 6.3 | 3.0 | 0.6 | 0.05 | 0.01 | - | 89 | 50.0 | 42.0 | 8.0 | 8500 | 6.17 | 2.0 | |
| 30 | C | 17.5 | 7.1 | - | - | - | - | 160 | 0.0 | 92.5 | 7.5 | 10000 | 5.53 | 3.2 | |
| 31 | A | 5.5 | 0.9 | - | - | - | - | 76 | 93.0 | 0.0 | 7.0 | 11000 | 5.18 | 1.3 | |
| 32 | B | 10.1 | 6.9 | 1.9 | - | - | - | 155 | 93.5 | 0.0 | 6.5 | 11500 | 5.02 | 3.2 | |
| 33 | C | 21.6 | 8.3 | - | - | - | - | 234 | 0.0 | 94.5 | 5.5 | 12000 | 4.88 | 3.2 | |
| 34 | A | 1.1 | 0.05 | - | - | - | - | 35 | 100.0 | 0.0 | 0.0 | 2100 | 15.97 | 0 | Invention |
| 35 | A | 1.2 | 0.05 | 0.3 | - | - | 0.5 | 45 | 75.0 | 25.0 | 0.0 | 3100 | 12.25 | 0 | |
| 36 | B | 1.0 | 1.0 | - | - | - | - | 64 | 95.0 | 0.0 | 5.0 | 4000 | 10.30 | 0 | |
| 37 | B | 1.1 | 1.0 | 0.1 | - | 0.05 | 0.4 | 76 | 65.0 | 29.0 | 6.0 | 6000 | 7.82 | 0 | |
| 38 | C | 1.2 | 0.5 | 0.1 | 0.03 | 0.05 | 0.02 | 95 | 94.8 | 0.0 | 5.2 | 8000 | 6.43 | 0 | |
| 39 | A | 1.2 | 0.06 | - | - | - | - | 34 | 80.0 | 0.0 | 20.0 | 2100 | 15.97 | 0.7 | Comparison |
| 40 | B | 1.3 | 0.5 | 0.1 | - | - | - | 47 | 86.0 | 0.0 | 14.0 | 4000 | 10,30 | 1.2 | |
| 41 | C | 1.0 | 1.2 | 0.2 | 0.02 | - | 0.01 | 78 | 50.0 | 41.0 | 9.0 | 10000 | 5.53 | 2.8 | |

EP 2 862 662 B1

13

As shown in Table 4, liquid metal embrittlement cracking was observed in the specimens of comparative examples where the $CO_2$ concentration in the shielding gas exceeded the range of the invention. In all these specimens, the coated layer evaporated region length L (see Fig. 3) in the test specimen 14 was less than 0.3 mm, and the deepest liquid metal embrittlement cracking was formed at the position within a distance of 0. 3 mm or less from the toe of weld in substantially all the specimens. In the specimens of examples of the invention with a $CO_2$ concentration in the shielding gas restricted to a range satisfying the expression (2), on the other hand, no liquid metal embrittlement cracking was observed. The coated layer evaporated region lengths L in the specimens of the invention were all 0.3 mm or more.

Example 2

A cold-rolled steel strip having the composition shown in Table 2 and having a thickness of 4.5 mm was used as a base steel for coating and subjected to a hot dip coating line to produce hot dip Zn-Al-Mg based alloy coated steel plates having various coated layer compositions. The hot dip Zn-Al-Mg based alloy coated steel plates were investigated for the influence of the composition of the shielding gas on the liquid metal embrittlement cracking property in the same evaluation method as in Example 1. The results are shown in Table 5. The composition of the coating layer, the coating weight and the composition of the shielding gas are shown in Table 5. The shielding gases applied to examples of the invention had a composition containing from 0 to 7% by volume of $CO_2$ and the balance of at least one of Ar and He.
[Table 5]

Table 5 (Plate Thickness: 4.5 mm)

| No. | Steel | Composition of Zn-Al-Mg based alloy coated layer (balance: Zn) (% by mass) | | | | | | coating weight (g/m²) | Composition of shielding gas (% by volume) | | | Welding heat input Q (J/cm) | $2900 \times Q^{-0.68}$ | Maximum crack depth (mm) | Note |
|---|---|---|---|---|---|---|---|---|---|---|---|---|---|---|---|
| | | Al | Mg | Si | Ti | B | Fe | | Ar | He | $CO_2$ | | | | |
| 51 | A | 4.5 | 1.1 | 0.5 | - | - | - | 35 | 100.0 | 0.0 | 0.0 | 6000 | 7.82 | 0 | |
| 52 | A | 6.1 | 3.1 | - | - | - | - | 88 | 76.5 | 20.0 | 3.5 | 6000 | 7.82 | 0 | |
| 53 | B | 14.5 | 7.7 | - | - | - | 1.2 | 129 | 49.6 | 45.2 | 5.2 | 6000 | 7.82 | 0 | |
| 54 | C | 17.8 | 8.1 | 0.3 | - | - | 1.6 | 165 | 0.0 | 93.0 | 7.0 | 6000 | 7.82 | 0 | |
| 55 | C | 21.6 | 9.2 | 0.5 | - | - | - | 240 | 94.5 | 0.0 | 5.5 | 6000 | 7.82 | 0 | Invention |
| 56 | A | 4.5 | 1.1 | 0.5 | - | 0.04 | 0.6 | 35 | 75.0 | 25.0 | 0.0 | 8000 | 6.43 | 0 | |
| 57 | A | 6.1 | 3.1 | 0.5 | 0.04 | 0.01 | - | 88 | 44.5 | 50.0 | 5.5 | 8000 | 6.43 | 0 | |
| 58 | B | 10.9 | 2.9 | 0.2 | - | - | - | 91 | 94.0 | 0.0 | 6.0 | 8000 | 6.43 | 0 | |
| 59 | B | 14.5 | 7.7 | 1.3 | - | - | 2.0 | 129 | 19.8 | 75.2 | 5.0 | 9000 | 5.94 | 0 | |
| 60 | C | 17.8 | 8.1 | 1.9 | - | - | 2.3 | 165 | 0.0 | 94.5 | 5.5 | 9000 | 5.94 | 0 | |
| 61 | C | 21.6 | 9.2 | 0.5 | - | - | 0.3 | 240 | 74.0 | 26.0 | 0.0 | 10000 | 5.53 | 0 | |
| 62 | A | 4.4 | 0.07 | 0.7 | - | - | 0.5 | 41 | 94.8 | 0.0 | 5.2 | 10000 | 5.53 | 0 | |
| 63 | B | 6.0 | 3.1 | 0.7 | 0.09 | 0.02 | - | 62 | 67.0 | 33.0 | 0.0 | 12000 | 4.88 | 0 | |
| 64 | C | 15.5 | 5.0 | - | 0.05 | - | - | 115 | 20.0 | 78.0 | 2.0 | 12000 | 4.88 | 0 | |
| 65 | C | 21.3 | 9.1 | - | - | - | - | 189 | 0.0 | 95.4 | 4.6 | 12000 | 4.88 | 0 | |
| 66 | B | 1.1 | 1.0 | 0.1 | - | 0.05 | 0.4 | 76 | 65.0 | 29.0 | 6.0 | 6000 | 7.82 | 0 | |
| 67 | C | 1.2 | 0.5 | 0.1 | 0.03 | 0.05 | 0.02 | 95 | 94.8 | 0.0 | 5.2 | 8000 | 6.43 | 0 | |

The hot dip Zn-Al-Mg based alloy coated steel plates using a base steel for coating having a thickness of 4.5 mm were also prevented from suffering liquid metal embrittlement cracking by restricting the $CO_2$ concentration in the shielding gas to a range satisfying the expression (2).

Example 3

A cold-rolled steel strip having the composition shown in Table 2 and having a thickness of 6.0 mm was used as a base steel for coating and subjected to a hot dip coating line to produce hot dip Zn-Al-Mg based alloy coated steel plates having various coated layer compositions. The hot dip Zn-Al-Mg based alloy coated steel plates were investigated for the influence of the composition of the shielding gas on the liquid metal embrittlement cracking property in the same evaluation method as in Example 1. The results are shown in Table 6. The composition of the coating layer, the coating weight and the composition of the shielding gas are shown in Table 6. The shielding gases applied to examples of the invention had a composition containing from 0 to 6% by volume of $CO_2$ and the balance of at least one of Ar and He.
[Table 6]

Table 6 (Plate Thickness: 6.0 mm)

| No. | Steel | Composition of Zn-Al-Mg based alloy coated layer (balance: Zn) (% by mass) | | | | | | coating weight $(g/m^2)$ | Composition of shielding gas (% by volume) | | | Welding heat input Q (J/cm) | $2900 \times Q^{-0.68}$ | Maximum crack depth (mm) | Note |
|---|---|---|---|---|---|---|---|---|---|---|---|---|---|---|---|
| | | Al | Mg | Si | Ti | B | Fe | | Ar | He | $CO_2$ | | | | |
| 71 | A | 4.5 | 1.1 | 0.5 | - | 0.04 | 0.6 | 35 | 75.0 | 25.0 | 0.0 | 8000 | 6.43 | 0 | Invention |
| 72 | A | 6.1 | 3.1 | 0.5 | 0.04 | 0.01 | - | 88 | 44.5 | 50.0 | 5.5 | 8000 | 6.43 | 0 | |
| 73 | B | 10.9 | 2.9 | 0.2 | - | - | - | 91 | 94.0 | 0.0 | 6.0 | 8000 | 6.43 | 0 | |
| 74 | B | 14.5 | 7.7 | 1.3 | - | - | 2.0 | 129 | 19.8 | 75.2 | 5.0 | 9000 | 5.94 | 0 | |
| 75 | C | 17.8 | 8.1 | 1.9 | - | - | 2.3 | 165 | 0.0 | 94.5 | 5.5 | 9000 | 5.94 | 0 | |
| 76 | C | 21.6 | 9.2 | 0.5 | - | - | 0.3 | 240 | 74.0 | 26.0 | 0,0 | 10000 | 5.53 | 0 | |
| 77 | A | 4.4 | 0.07 | 0.7 | - | - | 0.5 | 41 | 94.8 | 0.0 | 5.2 | 10000 | 5.53 | 0 | |
| 78 | B | 6.0 | 3.1 | 0.7 | 0.09 | 0.02 | - | 62 | 67.0 | 33.0 | 0.0 | 12000 | 4.88 | 0 | |
| 79 | C | 15.5 | 5.0 | - | 0.05 | - | - | 115 | 20.0 | 78.0 | 2.0 | 12000 | 4.88 | 0 | |
| 80 | C | 21.3 | 9.1 | - | - | - | - | 189 | 0.0 | 95.4 | 4.6 | 12000 | 4.88 | 0 | |
| 81 | C | 1.2 | 0.5 | 0.1 | 0.03 | 0.05 | 0.02 | 95 | 94.8 | 0.0 | 5.2 | 8000 | 6.43 | 0 | |

The hot dip Zn-Al-Mg based alloy coated steel plates using a base steel for coating having a thickness of 6.0 mm were also prevented from suffering liquid metal embrittlement cracking by restricting the $CO_2$ concentration in the shielding gas to a range satisfying the expression (2).

Comparative example 4

A cold-rolled steel strip having the composition shown in Table 2 and having a thickness of 2. 6 mm was used as a base steel for coating and subjected to a hot dip coating line to produce hot dip Zn-Al-Mg based alloy coated steel plates having various coated layer compositions. The hot dip Zn-Al-Mg based alloy coated steel plates were investigated for the influence of the composition of the shielding gas on the liquid metal embrittlement cracking property in the same evaluation method as in Example 1. The results are shown in Table 7. The composition of the coating layer, the coating weight and the composition of the shielding gas are shown in Table 7. The shielding gases applied to examples of the invention had a composition containing from 0 to 17% by volume of $CO_2$ and the balance of at least one of Ar and He.
[Table 7]

Table 7 (Plate Thickness: 2.6 mm)

| No. | Steel | Composition of Zn-Al-Mg based alloy coated layer (balance: Zn) (% by mass) | | | | | | coating weight (g/m$^2$) | Composition of shielding gas (% by volume) | | | Welding heat input Q (J/cm) | 205 × Q$^{-0.32}$ | Maximum crack depth (mm) | Note |
|---|---|---|---|---|---|---|---|---|---|---|---|---|---|---|---|
| | | Al | Mg | Si | Ti | B | Fe | | Ar | He | CO$_2$ | | | | |
| 91 | A | 4.1 | 0.05 | - | - | - | - | 44 | 100.0 | 0.0 | 0.0 | 2100 | 17.73 | 0 | Examples not of the Invention |
| 92 | B | 6.2 | 2.9 | 0.5 | 0.05 | 0.02 | - | 92 | 33.0 | 50.0 | 17.0 | 2100 | 17.73 | 0 | |
| 93 | C | 21.2 | 9.6 | 0.5 | 0.03 | 0.01 | 0.7 | 195 | 0.0 | 83.0 | 17.0 | 2100 | 17.73 | 0 | |
| 94 | A | 4.1 | 0.05 | 0.3 | - | - | 0.5 | 44 | 0.0 | 100.0 | 0.0 | 3100 | 15.65 | 0 | |
| 95 | B | 6.2 | 2.9 | 1.5 | - | - | 0.4 | 92 | 40.0 | 47.0 | 13.0 | 3100 | 15.65 | 0 | |
| 96 | C | 21.2 | 9.6 | - | - | - | 0.5 | 195 | 0.0 | 85.0 | 15.0 | 3100 | 15.65 | 0 | |
| 97 | A | 4.5 | 1.1 | 0.5 | - | - | - | 35 | 100.0 | 0.0 | 0.0 | 4500 | 13.89 | 0 | |
| 98 | A | 6.1 | 3.1 | - | - | - | - | 88 | 70.0 | 20.0 | 10.0 | 4500 | 13.89 | 0 | |
| 99 | B | 14.5 | 7.7 | - | - | - | 1.2 | 129 | 44.8 | 45.2 | 10.0 | 4500 | 13.89 | 0 | |
| 100 | C | 17.8 | 8.1 | 0.3 | - | - | 1.6 | 165 | 0.0 | 90.0 | 10.0 | 4500 | 13.89 | 0 | |
| 101 | A | 1.1 | 0.05 | - | - | - | - | 35 | 100.0 | 0.0 | 0.0 | 2100 | 17.73 | 0 | |
| 102 | A | 1.2 | 0.05 | 0.3 | - | - | 0.5 | 45 | 60.0 | 25.0 | 15.0 | 3100 | 15.65 | 0 | |
| 103 | B | 1.0 | 1.0 | - | - | - | - | 64 | 88.0 | 0.0 | 12.0 | 4000 | 14.42 | 0 | |

In the case where the hot dip Zn-Al-Mg based alloy coated steel plates using a base steel for coating having a thickness of 2.6 mm were used, it was confirmed that liquid metal embrittlement cracking was prevented in a range of the allowable upper limit satisfying the expression (3), which was broader than the expression (2).

Comparative example 5

A cold-rolled steel strip having the composition shown in Table 2 and having a thickness of 1.6 mm was used as a base steel for coating and subjected to a hot dip coating line to produce hot dip Zn-Al-Mg based alloy coated steel plates having various coated layer compositions. The hot dip Zn-Al-Mg based alloy coated steel plates were investigated for the influence of the composition of the shielding gas on the liquid metal embrittlement cracking property in the same evaluation method as in Example 1. The results are shown in Table 8. The composition of the coating layer, the coating weight and the composition of the shielding gas are shown in Table 8. The shielding gases applied to examples of the invention had a composition containing from 0 to 17% by volume of $CO_2$ and the balance of at least one of Ar and He.
[Table 8]

Table 8 (Plate Thickness: 1.6 mm)

| No. | Steel | Composition of Zn-Al-Mg based alloy coated layer (balance: Zn) (% by mass) | | | | | | coating weight (g/m$^2$) | Composition of shielding gas (% by volume) | | | Welding heat input Q (J/cm) | $205 \times Q^{-0.32}$ | Maximum crack depth (mm) | Note |
|---|---|---|---|---|---|---|---|---|---|---|---|---|---|---|---|
| | | Al | Mg | Si | Ti | B | Fe | | Ar | He | CO$_2$ | | | | |
| 111 | A | 4.1 | 0.05 | | - | - | - | 44 | 100.0 | 0.0 | 0.0 | 2100 | 17.73 | 0 | Examples note of the Invention |
| 112 | B | 6.2 | 2.9 | 0.5 | 0.05 | 0.02 | - | 92 | 33.0 | 50.0 | 17.0 | 2100 | 17.73 | 0 | |
| 113 | C | 21.2 | 9.6 | 0.5 | 0.03 | 0.01 | 0.7 | 195 | 0.0 | 83.0 | 17.0 | 2100 | 17.73 | 0 | |
| 114 | A | 4.1 | 0.05 | 0.3 | - | - | 0.5 | 44 | 0.0 | 100.0 | 0.0 | 3100 | 15.65 | 0 | |
| 115 | B | 6.2 | 2.9 | 1.5 | - | - | 0.4 | 92 | 40.0 | 47.0 | 13.0 | 3100 | 15.65 | 0 | |
| 116 | C | 21.2 | 9.6 | - | - | - | 0.5 | 195 | 0.0 | 85.0 | 15.0 | 3100 | 15.65 | 0 | |
| 117 | A | 4.5 | 1.1 | 0.5 | - | - | - | 35 | 100.0 | 0.0 | 0.0 | 4500 | 13.89 | 0 | |
| 118 | A | 6.1 | 3.1 | - | - | - | - | 88 | 70.0 | 20.0 | 10.0 | 4500 | 13.89 | 0 | |
| 119 | B | 14.5 | 7.7 | - | - | - | 1.2 | 129 | 44.8 | 45.2 | 10.0 | 4500 | 13.89 | 0 | |
| 120 | C | 17.8 | 8.1 | 0.3 | - | - | 1.6 | 165 | 0.0 | 90.0 | 10.0 | 4500 | 13.89 | 0 | |
| 121 | A | 1.1 | 0.05 | - | - | - | - | 35 | 100.0 | 0.0 | 0.0 | 2100 | 17.73 | 0 | |
| 122 | A | 1.2 | 0.05 | 0.3 | - | - | 0.5 | 45 | 60.0 | 25.0 | 15.0 | 3100 | 15.65 | 0 | |
| 123 | B | 1.0 | 1.0 | - | - | - | - | 64 | 88.0 | 0.0 | 12.0 | 4000 | 14.42 | 0 | |

In the case where the hot dip Zn-Al-Mg based alloy coated steel plates using a base steel for coating having a thickness of 1.6 mm were used, it was confirmed that liquid metal embrittlement cracking was prevented in a range satisfying the expression (3).

Reference Sign List

| | |
|---|---|
| 1, 1' | base steel |
| 2 | weld bead |
| 3 | toe of weld |
| 5 | Zn-Al-Mg based alloy layer |
| 6 | Fe-Al based alloy layer |
| 7 | coated layer |
| 8 | Zn-Al-Mg based molten metal |
| 9 | coated layer evaporated region |
| 10 | molten metal solidified region |
| 11 | non-melted coated layer region |
| 14 | test specimen |
| 15 | boss |
| 16 | weld bead |
| 17 | overlapping portion of weld bead |
| 31 | welding torch |
| 32 | welding wire |
| 33 | electrode |
| 34 | shielding gas |
| 35 | arc |

## Claims

1. A method for producing an arc-welded structural member comprising a step of joining steel members by gas-shielded arc-welding to manufacture a welded structural member, at least one of the members to be joined being a hot dip Zn-Al-Mg based alloy coated steel plate member, and a shielding gas being a gas that is based on an Ar gas, a He gas or an Ar-He mixed gas and **characterized in that** the shielding gas has a $CO_2$ concentration being 0-17 % by volume and satisfying the following expression (2) in relation to a welding heat input Q (J/cm) shown by the following expression (1):

$$Q = (I \times V) / v \qquad (1)$$

$$0 \leqq C_{CO2} \leqq 2900Q^{-0.68} \qquad (2)$$

wherein I represents a welding current (A), V represents an arc voltage (V), v represents a welding speed (cm/sec), and $C_{CO2}$ represents a $CO_2$ concentration in the shielding gas (% by volume).

2. The method for producing an arc-welded structural member according to claim 1, wherein the welding heat input Q is in a range of from 2,000 to 12,000 J/cm.

3. The method for producing an arc-welded structural member according to claims 1 or 2, wherein the hot dip Zn-Al-Mg based alloy coated steel plate has a coated layer that contains: from 1.0 to 22.0% of Al; from 0.05 to 10.0% of Mg; from 0 to 0.10% of Ti; from 0 to 0.05% of B; from 0 to 2.0% of Si; from 0 to 2.5% of Fe; the balance of Zn; and unavoidable impurities, all in terms of % by mass.

4. The method for producing an arc-welded structural member according to any one of claims 1 to 3, wherein the hot dip Zn-Al-Mg based alloy coated steel plate has a coating weight of from 20 to 250 g/m$^2$ per one surface.

**Patentansprüche**

1. Verfahren zum Herstellen eines lichtbogengeschweißten Strukturelementes, welches einen Schritt des Verbindens von Stahlelementen durch Schutzgaslichtbogenschweißen aufweist, um ein geschweißtes Strukturelement herzustellen, wobei zumindest eines der zu verbindenden Elemente ein feuerverzinktes mit einer Zn-Al-Mg-basierten Legierung beschichtetes Stahlblechelement ist und wobei ein Schutzgas ein Gas ist, welches auf einem Ar-Gas, einem He-Gas oder einem gemischten Ar-He-Gas basiert, und wobei es **dadurch gekennzeichnet ist, dass** das Schutzgas eine $CO_2$-Konzentration hat, die 0 bis 17 Volumen-% ist und den folgenden Ausdruck (2) bezüglich eines Schweißwärmeeintrags Q (J/cm) erfüllt, der durch den folgenden Ausdruck (1) gezeigt wird:

$$Q = (I \times V) / v \qquad (1)$$

$$0 \le C_{CO2} \le 2900\, Q^{-0,68} \qquad (2)$$

   wobei I einen Schweißstrom (A) darstellt, wobei V eine Lichtbogenspannung (V) darstellt, wobei v eine Schweißgeschwindigkeit (cm/s) darstellt, und wobei $C_{CO2}$ eine $CO_2$-Konzentration in dem Schutzgas (Volumen-%) darstellt.

2. Verfahren zum Herstellen eines lichtbogengeschweißten Strukturelementes nach Anspruch 1, wobei der Schweißwärmeeintrag Q in einem Bereich von 2000 bis 12.000 J/cm ist.

3. Verfahren zur Herstellung eines lichtbogengeschweißten Strukturelementes nach Anspruch 1 oder 2, wobei das feuerverzinkte mit einer Zn-Al-Mg-basierten Legierung beschichtete Stahlblech eine Überzugsschicht hat, die Folgendes enthält: von 1,0 bis 22,0 % Al; von 0,05 bis 10,0 % Mg; von 0 bis 0,10 % Ti; von 0 bis 0,05 % B; von 0 bis 2,0 % Si; von 0 bis 2,5 % Fe; wobei der Rest Zn und nicht vermeidbaren Verunreinigungen ist, und zwar alles in Massen-%.

4. Verfahren zur Herstellung eines lichtbogengeschweißten Strukturelementes nach einem der Ansprüche 1 bis 3, wobei das feuerverzinkte mit einer Zn-Al-Mg-basierten Legierung beschichtete Stahlblech ein Überzugsgewicht von 20 bis 250 g/m$^2$ pro Oberfläche hat.

**Revendications**

1. Procédé pour fabriquer un élément structurel soudé à l'arc comprenant une étape consistant à joindre des éléments en acier par soudage à l'arc sous protection gazeuse pour fabriquer un élément structurel soudé, au moins l'un des éléments à joindre étant une plaque d'acier revêtue d'un alliage à base de Zn-Al-Mg par immersion à chaud, et un gaz de protection qui est basé sur un gaz Ar, un gaz He ou un mélange de gaz Ar-He, et **caractérisé en ce que** le gaz de protection a une concentration en $CO_2$ de 0-17 % en volume et vérifiant l'expression (2) suivante en relation avec une quantité de chaleur de soudage fournie Q (J/cm) représentée par l'expression (1) suivante :

$$Q = (I \times V) / v \qquad (1)$$

$$0 \le C_{CO2} \le 2900 Q^{-0,68} \qquad (2)$$

   où I représente un courant de soudage (A), V représente une tension d'arc (V), v représente une vitesse de soudage (cm/seconde), et $C_{CO2}$ représentent une concentration en $CO_2$ dans le gaz de protection (en % en volume).

2. Procédé pour fabriquer un élément structurel soudé à l'arc selon la revendication 1, dans lequel la quantité de chaleur de soudage fournie Q est comprise entre 2000 et 12000 J/cm.

3. Procédé pour fabriquer un élément structurel soudé à l'arc selon les revendications 1 ou 2, dans lequel la plaque d'acier revêtue d'alliage à base de Zn-Al-Mg par immersion à chaud comporte une couche de revêtement qui

**EP 2 862 662 B1**

contient : de 1,0 à 22,0 % de Al ; de 0,05 à 10,0% de Mg ; de 0 à 0,10 % de Ti ; de 0 à 0,05 % de B ; de 0 à 2,0 % de Si ; de 0 à 2,5 % de Fe ; le reste étant du Zn ; et d'inévitables impuretés, tous les termes étant en % en masse.

4. Procédé pour fabriquer un élément structurel soudé à l'arc selon l'une quelconque des revendications 1 à 3, dans lequel la plaque d'acier revêtue d'un alliage à base de Zn-Al-Mg par immersion à chaud a un poids de revêtement compris entre 20 et 250 g/m$^2$ par surface.

[Fig.1]

[Fig.2]

[Fig.3]

[Fig.4]

[Fig.5]

[Fig.6]

[Fig.7]

[Fig.8]

**REFERENCES CITED IN THE DESCRIPTION**

**Patent documents cited in the description**

- JP 2001096368 A
- JP 2011208264 A
- JP 3149129 B
- JP 3179401 B
- JP 4475787 B
- JP 3715220 B
- JP 2005230912 A